# EUROPÄISCHE PATENTANMELDUNG

(11) **EP 3 312 789 A1**
(43) Veröffentlichungstag der Anmeldung: **25.04.2018**
(21) Anmeldenummer: 16195350.0
(22) Anmeldetag: 24.10.2016
(51) Int. Cl.: G06Q 30/02

(54) **ELEKTRONISCHE VORRICHTUNG UND VERFAHREN ZUM AUSFÜHREN EINES PROGRAMMS ANHAND VON PROFILDATEN**

(71) Anmelder: OKEANOS CORPORATION, Victoria, Mahe (SC)
(72) Erfinder: VIDA Michel, 851 01 Bratislava (SK)
(74) Vertreter: Jeck, Anton

(57) **Zusammenfassung**

Eine Elektronische Vorrichtung (100) umfasst eine Speichereinheit (110) zum Speichern eines Programms, eine Rechnereinheit (120) zum Ausführen des Programms, eine Anzeigeeinheit (130) zum Empfangen von Anzeigesignalen von der Rechnereinheit (120) und basierend darauf zum Anzeigen eines Programmverlaufs des Programms, eine Eingabeeinheit (140) zum Empfangen von Eingabebefehlen zum Steuern des Programms von einem Benutzer der elektronischen Vorrichtung (100) und zum Ausgeben von auf den Eingabebefehlen basierenden Eingabesignalen an die Rechnereinheit (120) und eine Kommunikationseinheit (150) zum Kommunizieren mit externen elektronischen Geräten (160) über ein Netzwerk (170). Hierbei ist die Rechnereinheit (120) geeignet, das Programm anhand der Eingabesignale und anhand von Kommunikationsdaten auszuführen, die die elektronische Vorrichtung (100) über das Netzwerk (170) von zumindest einem der externen elektronischen Geräte (160) empfängt, auf dem das Programm ausgeführt wird. Zudem ist die Rechnereinheit (120) geeignet, Profildaten eines das Programm betreffenden Profils des Benutzers zu erzeugen und das zumindest eine externe elektronische Gerät (160) anhand der Profildaten auszuwählen.

## Beschreibung

Die vorliegende Erfindung betrifft eine elektronische Vorrichtung zum Ausführen eines Programms anhand von Profildaten und ein Verfahren zum Ausführen eines Programms anhand von Profildaten.

Eine Klasse von Computerprogrammen, die zum Beispiel auf tragbaren elektronischen Geräten, wie Mobiltelefonen oder tragbaren Computern, ausgeführt werden können, zeichnet sich durch geringen Speicherbedarf und einfache Bedienbarkeit aus. Typischerweise werden solche Computerprogramme, auch Applikationen oder Apps genannt, in kurzer Zeit über ein Netzwerk, z. B. dem Internet, von einem Server heruntergeladen, der z. B. von dem Hersteller des Computerprogramms oder einem Zwischenhändler bereitgestellt wird. Die Bedienung des Computerprogramms erfolgt dabei zumeist durch einfaches Auswählen von angezeigten Programminhalten, z. B. durch Antippen bestimmter Icons auf einem Touch-Screen des elektronischen Geräts. Weitere kompliziertere Eingaben mittels z. B. Texteingabe oder einer Steuerung über richtungsempfindliche Sensoren, wie etwa einem analogen Joystick, sind dabei nicht nötig und aufgrund der Portabilität und oft geringen Größe der Bildschirmanzeige meist nicht erwünscht.

Der geringe Speicherbedarf, den solche Computerprogramme benötigen dürfen, und die zu fordernde einfache Bedienung bedingen, dass solche Computerprogramme oft einfacher Natur sind und einem Benutzer nur wenige Interaktionsmöglichkeiten bieten. Dies wird von vielen Benutzern als Nachteil empfunden.

Aufgabe der vorliegenden Erfindung ist, eine elektronische Vorrichtung und ein Verfahren zum Ausführen eines Programms anzugeben, dass bei geringem Speicherplatzbedarf und einfacher Bedienbarkeit des Programms große Interaktivität bietet.

Diese Aufgabe wird jeweils durch den Gegenstand der unabhängigen Ansprüche gelöst. Weiterbildungen sind in den abhängigen Ansprüchen angegeben.

Eine elektronische Vorrichtung umfasst eine Speichereinheit zum Speichern eines Programms, eine Rechnereinheit zum Ausführen des Programms, eine Anzeigeeinheit zum Empfangen von Anzeigesignalen von der Rechnereinheit und basierend darauf zum Anzeigen eines Programmverlaufs des Programms, eine Eingabeeinheit zum Empfangen von Eingabebefehlen zum Steuern des Programms von einem Benutzer der elektronischen Vorrichtung und zum Ausgeben von auf den Eingabebefehlen basierenden Eingabesignalen an die Rechnereinheit und eine Kommunikationseinheit zum Kommunizieren mit externen elektronischen Geräten über ein Netzwerk. Hierbei ist die Rechnereinheit geeignet, das Programm anhand der Eingabesignale und anhand von Kommunikationsdaten auszuführen, die die elektronische Vorrichtung über das Netzwerk von zumindest einem der externen elektronischen Geräte empfängt, auf dem das Programm ausgeführt wird. Zudem ist die Rechnereinheit geeignet, Profildaten eines das Programm betreffenden Profils des Benutzers zu erzeugen und das zumindest eine externe elektronische Gerät anhand der Profildaten auszuwählen.

Ein Verfahren zum Betreiben einer elektronischen Vorrichtung umfasst als Schritte: Speichern eines Programms durch eine Speichereinheit, Ausführen des Programms durch eine Rechnereinheit, Empfangen von Anzeigesignalen von der Rechnereinheit und basierend darauf Anzeigen eines Programmverlaufs des Programms, Empfangen von Eingabebefehlen zum Steuern des Programms von einem Benutzer der elektronischen Vorrichtung und Ausgeben von auf den Eingabebefehlen basierenden Eingabesignalen an die Rechnereinheit und Kommunizieren mit externen elektronischen Geräten über ein Netzwerk. Hierbei wird das Programm anhand der Eingabesignale und anhand von Kommunikationsdaten ausgeführt, die die elektronische Vorrichtung über das Netzwerk von zumindest einem der externen elektronischen Geräte empfängt, auf dem das Programm ausgeführt wird. Zudem werden Profildaten eines das Programm betreffenden Profils des Benutzers von der Rechnereinheit erzeugt und das zumindest ein externes elektronisches Gerät von der Rechnereinheit anhand der Profildaten ausgewählt.

Ein nichtflüchtiges, computerlesbares Speichermedium mit einem Computerprogramm, kann eine elektronische Vorrichtung veranlassen, das oben beschriebene Verfahren auszuführen.

Hierbei kann die Kommunikationseinheit geeignet sein, die Profildaten an die externen elektronischen Geräte zu kommunizieren.

Die Rechnereinheit kann geeignet sein, vorgegebene Teile des Programms nur nach Erhalt einer diesbezüglichen Bestätigung durch einen Hersteller und/oder Vertreiber des Programms auszuführen.

Die vorgegebenen Teile des Programms können Speichern von Bonusdaten in den Profildaten durch die Speichereinheit umfassen, die insbesondere über dafür geeignete Webseiten und/oder Programme zwischen Benutzern des Programms getauscht werden können.

Die Bonusdaten können eine virtuelle Währung und/oder Gutscheininformationen umfassen, die in der realen Welt eingelöst werden können. Die Bonusdaten können in Abhängigkeit von einer Zeitdauer, die das Programm ausgeführt wurde, oder dem Verlauf des Programms ausgegeben werden.

Die vorgegebenen Teile des Programms können Anzeigen von programmfremden Informationen durch die Anzeigeeinheit umfassen und die programmfremden Informationen können insbesondere auf die Profildaten bezogene Werbung von Unternehmen, die insbesondere während des Programmverlaufs angezeigt wird, oder Rabattgutscheine für den Benutzer des Programms, die für einen bestimmten Programmverlauf ausgegeben werden, oder Werbekampagnen-Informationen von Unternehmen, die auf einem Web-Portal erstellt wurden, oder Produktinformationen, die geeignet sind, auf eine Webseite zu verweisen, auf der ein den Produktinformationen entsprechendes Produkt angeboten wird, darstellen.

Eine Mehrzahl von programmfremden Informationen kann während des Ausführens des Programms von der Kommunikationseinheit empfangen und/oder von der Speichereinheit gespeichert werden und die Rechnereinheit kann anhand der Profildaten daraus die programmfremden Informationen auswählen, die angezeigt werden.

Das externe elektronische Gerät kann auch anhand der Profildaten des Benutzers des Programms auf dem externen elektronischen Gerät ausgewählt werden, insbesondere anhand eines in den Profildaten des Benutzers der elektronischen Vorrichtung gespeicherten Levels und eines in den Profildaten des Benutzers des externen elektronischen Geräts gespeicherten Levels.

Die Bonusdaten können geeignet sein, in einer Interaktion mit einem Benutzer des externen elektronischen Geräts als Einsatz verwendet zu werden. Der Ausgang einer Interaktion mit einem Benutzer des externen elektronischen Geräts kann über das Netzwerk geteilt werden.

Die virtuelle Währung kann nur innerhalb des Programms erworben und verwendet werden, insbesondere für den Kauf von speziellen Effekten, die nur durch den Eintausch der virtuellen Währung im Programm vom Hersteller und/oder Vertreiber des Programms freigegeben werden.

Die programmfremden Informationen können gegen reales Geld auf einer Webseite des Hersteller und/oder Vertreibers des Programms gekauft werden, insbesondere durch den Tausch von realem Geld gegen eine Ecoins genannte virtuelle Währung, die zum Eintausch gegen die programmfremden Informationen verwendet werden kann und die über dafür geeignete Webseiten und/oder Programme zwischen Benutzern des Programms getauscht werden kann. Die programmfremden Informationen können geeignet sein, gegen eine Gebühr aus dem Programm auf eine Verkaufs-Webseite weiterzuleiten.

Mehrere verschiedene Sätze von Profildaten können für einen einzigen Benutzer des Programms vorhanden sein.

Dadurch, dass das Programm nicht nur anhand von Eingabebefehlen durch einen Benutzer ausgeführt wird, sondern auch anhand von Kommunikationsdaten, die das elektronische Gerät von anderen elektronischen Geräten empfängt, auf welchen das gleiche Programm ausgeführt wird, kann eine beträchtlich vergrößerte Interaktivität des Programms bereitgestellt werden, da der Verlauf des Programms nicht nur von den Eingaben des Benutzers abhängt, sondern auch von den Eingaben der Benutzer der anderen Geräte. Zudem vergrößert sich die Interaktivität dadurch, dass Profildaten des Benutzers dazu verwendet werden, die elektronischen Geräte auszuwählen, mit denen die elektronische Vorrichtung interagiert, da sich durch eine Änderung der Profildaten der Kreis der möglichen Interaktionspartner verändert.

Bei dem Programm kann es sich z. B. um eine Spiele Applikation (Spiele-App) für ein Smartphone oder einen Tablet-Computer handeln. Das Spiel kann z. B. von dem Server des Hersteller oder eines Anbieters, etwa von einem Play-Store, wie etwa dem ios Appstore oder dem Android Googleplay, heruntergeladen und auf dem Smartphone installiert werden. Das Spiel kann durch Drücken oder Antippen eines dem Spiel entsprechenden Symbols, das z. B. den Namen des Spiels enthält, auf dem Smartphone-Bildschirm gestartet werden. Nach dem Spielstart kann das Spiel die Möglichkeit bieten, es ohne Registrierung zu spielen, bzw. den Benutzer auffordern, sich anzumelden oder sich zu registrieren.

Hierbei kann die Kommunikationseinheit geeignet sein, Profildaten an die externen elektronischen Geräte zu kommunizieren. Dies ermöglicht es, die Interaktionsmöglichkeiten der elektronischen Vorrichtung mit den externen elektronischen Geräten zu optimieren. Dabei kann die Anmeldung mittels der Eingabe von Daten des Benutzers oder mittels Bezug auf eine bereits erfolgte Registrierung bezüglich eines anderen Programms, wie etwa einer Registrierung bei Facebook™, erfolgen. Die Registrierung und anschließende Anmeldung erlaubt dem Spieler, ein Spielerprofil anzulegen und die Spielerprofile anderer Spieler über das Netzwerk einzusehen, die über das Netzwerk von der Kommunikationseinheit empfangen werden. Gleichzeitig werden die Profildaten des Benutzers an die anderen elektronischen Geräte kommuniziert. Nach der Anmeldung kann ein Bildschirm mit Spielauswahlmöglichkeiten angezeigt werden. Hier kann der Spieler wählen, ob er alleine oder gegen andere Spieler spielen will. Ebenso kann er Informationen bezüglich seines Benutzerkontos ändern.

Hierbei kann das Erstellen eines Profils ermöglichen, dass von Dritten profilbezogene Informationen wie Produktinformationen oder Werbung konkret anhand der Profildaten des Profils erzeugt und übermittelt werden. Das Erstellen eines Profils kann zum Beispiel dazu führen, dass spezielle Inhalte der Anwendung zugänglich werden, wie etwa Belohnungen in Form von Icons, die im Spiel für verschiedene Effekte oder als Spieleinnsatz in einem Multiplayerspiel verwendet werden können.

Dabei können so viele Profile wie erwünscht erstellt werden, um verschiedenen Bedürfnissen eines Benutzers gerecht zu werden. In Profil können zum Beispiel angegeben werden: ein Ort, ein Zeitraum und/oder eine für den Benutzer interessante Produktkategorie. Beispiele für verschiedene Profile können sein: Profil 1: New York, Werktage, Verpflegung und Transport; Profil 2: Tokio, Wochenende, Spaß und Kultur; Profil 3: Barcelona, 15. bis 17. September, Reise/Ausgaben (Unterhaltung, Kultur, Erholung, Sport, Transport, Reiseversicherung ...). Anhand dieser Profile, können konkrete Angebote, wie etwa Werbung, in der Form von in der Anwendung verwendbaren Symbolen/Ikonen und/oder Gutscheine, die anhand der Profildaten ausgewählt werden, erstellt werden. Diese Angebote, wie etwa Gutscheine und/oder Werbeflyer werden vom Anbieter der Anwendung bzw. des Spiels anhand der Profildaten im Spielverlauf angeboten. Sie können einem Benutzer des Spiels vom Anbieter des Spiels aber auch auf anderen Portalen, wie z. Beispiel "www.voucher.com" zugewiesen werden. Auch kann z. B. der Verkauf von Produkten, wie etwa Tickets für verschiedene Veranstaltungen nach dem Profil angeboten werden. Hierbei kann die Zeit und/oder der Ort für das Angebot begrenzt sein.

Die Rechnereinheit kann geeignet sein, vorgegebene Teile des Programms nur nach Erhalt einer diesbezüglichen Bestätigung durch einen Hersteller und/oder Vertreiber des Programms auszuführen. Dadurch ist es möglich, dem Benutzer bestimmte Informationen oder Vorteile, wie die oben beschriebenen Gutscheine, nur unter bestimmten Bedingungen zukommen zu lassen. Diese können von dem Hersteller bzw. Anbieter oder Vertreiber dynamisch festgesetzt werden. Dadurch erhöhen sich die Interaktionsmöglichkeiten des Programms. Zudem bleibt der Speicherbedarf des Programms gering, da die Bedingungen vom Hersteller/AnbieterNertreiber des Programms z. B. auf einem Server bereitgestellt werden und von der elektronischen Vorrichtung über die Kommunikationseinheit abgefragt werden können, ohne dass sie in der Speichereinheit gespeichert werden müssen.

Die vorgegebenen Teile des Programms können das Speichern von Bonusdaten in den Profildaten durch die Speichereinheit umfassen. Dies ermöglicht es einem Spieler, unter bestimmten, dynamisch festgesetzten Bedingungen, eine bestimmte Art von Vorteilen bei dem Ausführen des Programms zu erhalten. Dadurch erhöht sich die Flexibilität und Interaktivität des Programms zusätzlich, ohne dass größere Mengen an Speicherbedarf für komplexe Programmabläufe erzeugt werden. Die Bestätigung die Bonusdaten verwenden zu können, kann z. B. davon abhängen, ob ein Benutzer des Programms bereit ist, bestimmte Handlungen auszuführen. Zum Beispiel kann eine Freigabe der Bonusdaten nur gegen Bezahlung erfolgen.

Dabei können die Bonusdaten eine virtuelle Währung (z. B. Coins/Icoins oder Ecoins) und/oder Gutscheininformationen umfassen. Die virtuelle Währung bzw. die Gutscheininformation können erst nach einer Bestätigung durch den Hersteller/AnbieterNertreiber des Programms einsetzbar sein. Zum Beispiel kann der Einsatz von einer Bezahlung für die virtuelle Währung bzw. Gutscheininformation abhängen. Der Einsatz kann aber auch davon abhängen, dass bestimmte Fortschritte oder Erfolge bei der Ausführung des Programms erzielt wurden. Eine virtuelle Währung, wie etwa Münzen von "Spielergold", kann z. B. dazu benutzt werden, bestimmte Vorteile bei der Ausführung eines Programms zu erhalten. Andererseits kann durch die Ausgabe von Gutscheininformationen, die sich z. B. als Gutscheincode oder QR-Code bei realen Händlern einlösen lassen, auch die reelle Welt in den Programmablauf eingebunden werden, was wiederum die Interaktivität des Programms erhöht.

Es können zum Beispiel auf einem Startbildschirm einer Spiele-App auch Informationen über einen Spielstand und einen aktuellen Münzenstand angezeigt werden. Der aktuelle Münzenstand kann sich dabei aus dem Erfolg bei dem Ausführen der Spiele-App ergeben. Gleichzeitig kann aber auch die Möglichkeit bestehen und dementsprechend angezeigt werden, spezielle Bonuseffekte (z. B. die Verwendung von Hilfsmitteln oder andere Spielerleichterungen) oder Spielergold zu kaufen.

Darüber hinaus können auch weitere Spieleinstellungen geändert werden. Zum Beispiel kann auf Bildschirme zur Änderung der Einstellungen für Helligkeit und Lautstärke sowie der Einstellungen für das Benutzerkontos, des Fotos des Spielers und/oder eines Kennworts zugegriffen werden. Zugleich kann eine Anleitung für das Spiel einsehbar sein. Alternativ oder zusätzlich kann es auch möglich sein, dem Spielbetreiber Feedback zu schicken. Auch eine Abmeldung kann über den Startbildschirm erfolgen.

Auf einem Bildschirm für den Kauf von Bonusmünzen bzw. Spielergold können unterschiedliche Mengen von Spielergold erworben werden. Das Spielergold kann z. B. unter dem Namen Icoin (n) oder ECOIN (e) für den Preis von z. B. 1 Münze pro 1 Euro-Cent erworben werden. Es kann auch möglich sein, Bonusdaten über die Kommunikationseinheit auszutauschen. So kann es möglich sein, Spielergold zwischen verschiedenen Spielern, zwischen Spielern und dem Spielebetreiber, aber auch zwischen Spielern/Spielebetreibern und Dritten, wie etwa Unternehmen, zu transferieren. Zum Beispiel können vom Spielebetreiber Plattformen eingerichtet werden, die über mehrere Anwendungen/Web-Portale verfügen, die Portale darstellen, zwischen denen die iCoins und eCoins, die man auf den jeweiligen Portalen gewonnen hat, geteilt werden können. Icoin ist eine virtuelle Währung, die im Sinne der Erfindung als "Spielerwährung" oder als "Spielergeld" oder als Coin zu verstehen ist, und zwar in einem bestimmten Verhältnis zum Ecoin. Es kann z. B. 1 Icoin = 0,01 Ecoin = 0,01 EUR sein.

Beim Spiel kann sich die Firma bzw. der Nutzer für EUR Ecoins kaufen, und zwar für EUR/USD. Das Verhältnis EUR/Ecoin kann z. B. 1:1 definiert sein. Für Ecoins kauft er Dienstleistungen, Waren, Produkte. Für diese Icoins kann er sich Effekte im Spiel kaufen. Auf dem Portal Iconity kann die Firma für EUR dafür Ecoins kaufen. Für diese Ecoins kann die Firma Werbung kaufen (Ecoin-Punkte, Voucher oder Icoins). Die Icoins können dann an die Spieler als Werbung verschenkt werden. Möglich wäre auch der umgekehrte Weg. Schließlich kann im Rahmen der Erfindung bei der definierten Plattform mit Iconity (Ecoins, Icoins, Voucher) gespielt werden, und zwar sowohl im Zuge eines Spieles, als auch auf einer definierten Webseite, in Programmen und/oder in der reellen Welt gearbeitet und/oder mit
- weiteren Gegenspielern (Multiplayer)
- Austausch, Verkauf, Schenkung, Kauf
- Verwendung beim Kauf
gespielt werden kann.

Damit kann also ein Handel zwischen Spielern, Unternehmen und Spielbetreibern in Bonusdaten, d. h. Bonusmünzen oder Spielergold, stattfinden. Spieler können damit unter anderem Spielverbesserungen und/oder Waren oder Dienstleistungen von Unternehmen kaufen. Unternehmen können mittels der Münzen bei Spielbetreibern Werberaum kaufen, der den Spielern während des Ausführens des Programms angezeigt wird. Der Handel kann auch auf einer Börse erfolgen, die es ermöglicht, den Verkauf und Wechsel von auf Rabattgutscheinen gerichteten Bonusdaten durchzuführen.

Hierbei bezeichnet ein "Coin" einen klassischen Coin, den man z. B. in der Anwendung "Iconity" verwendet, der nur in der Anwendung gekauft werden kann und der verwendet wird, um Effekte, Bonus-Effekte oder ähnliches dafür zu kaufen. "ECOIN" sind Coins, die man z. B. auf einer zur Anwendung gehörenden Website, z. B. "www.iconitygame.com" erhalten kann. Coins werden Unternehmen zugeteilt, die über ein Web-Portal des Anwendungsbetreibers Anzeigen, z. B. in der Form von Werbung, bezahlen, die daraufhin in der Spielanwendung, z. B. in "Iconity" in der Form von Symbolen/Ikonen oder Gutscheinen angezeigt werden. Erst nachdem das Unternehmen/der Benutzer Werbung erstellt/bestellt hat, wird das Unternehmen/der Benutzer aufgefordert, zu zahlen. Hierbei überprüft der Anwendungsbetreiber, ob die Zahlung vom Unternehmen/Benutzer überwiesen wurde. Falls dies der Fall ist, werden dem Unternehmen/Benutzer Coins oder Euro über einen Administrator zugeschrieben. iCoins und Ecoins können hierbei auch über andere Anwendungen und/oder Webseiten erhalten oder auf diesen verwendet werden, jedoch ausschließlich durch Vermittlung einer Plattform des Anwendungsbetreibers, wie etwa einer Webseite oder einem Server. Ecoin ist eine virtuelle Währung und kann z. B. 1 EUR entsprechen (1 Ecoin = 1 EUR). Die Teilnehmer können den "Kurs" selbst definieren.

Die Profildaten, die z. B. auf einem Bildschirm für Kontoänderungen angezeigt werden können, können z. B. einen Spielernamen, ein Spielerfoto, ein Spiellevel, eine aktuelle Punktzahl des Spielers, eine Menge von Spielergold des Spielers und eine Spielerliste mit aktuellen Spielständen enthalten. Neben Benutzerdaten können die Profildaten also auch Informationen über die Bonusdaten oder über die Benutzer von externen elektronischen Geräten enthalten, mit denen der Benutzer der elektronischen Vorrichtung bereits in Kontakt stand.

Die verschiedenen Anzeigebildschirme können in einfacher Weise miteinander verknüpft sein. So kann man z. B. von den Bildschirmen für die Änderungen der Einstellungen, für den Kauf von Spielergold und für die Profiländerungen durch Drücken/Antippen einer "Back"-Taste zurück zum Bildschirm mit der Spielauswahl gelangen.

Eine weitere Steigerung der Interaktivität des Programms kann durch die Verwendung der Bonusdaten bei der gemeinsamen Ausführung des Programms mit Benutzern der externen elektronischen Geräte erfolgen. Zum Beispiel kann der Spieler ein "Multiplayer"-Spiel wählen. Dann kann ein Bildschirm angezeigt werden, über den man einen Gegner aus der ganzen Welt finden kann oder über den man bereits bekannte Spieler (Freunde) auswählen kann. Es ist dann möglich, Bonusdaten, d. h. Spielergold oder Rabattgutscheine als Einsatz für zumindest ein Spiel auszuwählen. Wenn das Multiplayer-Spiel gewählt wird, kann man Coins oder Gutscheine einsetzen und das Spiel wählt einen ebenbürtigen Gegner aus. (z. B. werden bei einem Level von 8 des Benutzers, mittels eines Algorithmus Gegner mit einem Level zwischen maximal 10 und minimal 6 ausgewählt).

Dabei kann die Wahl des Gegners zufällig erfolgen. Es kann aber das Niveau der Spieler berücksichtigt werden, um die Gleichwertigkeit der gegeneinander spielenden Spieler zu gewährleisten. Nach der Auswahl des Gegners und des Wetteinsatzes wird der Spieler über einen Pfeil auf den Hauptbildschirm des Spiels zurückgeleitet. Vom Hauptbildschirm aus kann der Spieler zum Kauf von zusätzlichen Effekten übergehen. Diese Extraeffekte können je nach erreichtem Spielniveau freigegeben werden.

Ziel des Spiels ist es, die höchste Punktzahl zu erhalten. Der Spieler mit der erreichten höchsten Punktzahl gewinnt die eingesetzten Münzen oder Rabattgutscheine der Gegner. Seinen Erfolg kann der Spieler über Webseiten sozialer Netzwerke, wie etwa Facebook™, mit anderen Spielern teilen.

Gemäß einer weiteren alternativen Funktion des Programms kann vom Hauptbildschirm aus z. B. einmal pro Tag ein spezielles Unterprogramm des Programms gestartet werden. Das Unterprogramm kann zum Gewinn von Bonusdaten führen. Es kann z. B. als "Glücksradspiel" oder "Wheel of Fortune" vom Spieler gestartet und gespielt werden.

Dagegen hat ein normales Spiel z. B. eine Dauer von einer Minute. Zum Beispiel kann nachdem das Spiel gestartet ist, ein Bildschirm mit einem 8x8-Spielfeld abgebildet werden, das verschiedene Symbole/Ikonen enthält. Der Spieler muss dann die nebeneinander liegenden Symbole derart untereinander vertauschen, dass drei oder mehr gleiche Symbole in einer Reihe oder einer Spalte angeordnet sind. Falls dem Spieler dies gelingt, erhält er einen Gewinn, z. B. Spielpunkte oder Bonusdaten, wie etwa Spielergold oder Gutscheine. Ein Spieler kann auch während des Spiels ihm zur Verfügung stehende Effekte benutzen, um den Verlauf des Spiels verändern.

Die vorgegebenen Teile des Programms, die nur nach Erhalt einer diesbezüglichen Bestätigung durch einen Hersteller und/oder Vertreiber des Programms ausführbar sind, können auch ein Anzeigen von programmfremden Informationen durch die Anzeigeeinheit umfassen. Dadurch wird es Dritten, wie etwa Unternehmen ermöglicht, sich ebenfalls an dem Ausführen des Programms, z. B. durch Anzeigen bestimmter Informationen, zu beteiligen. Dadurch werden die Interaktivität und der Abwechslungsreichtum des Programms zusätzlich erhöht. Gleichzeitig behält der Hersteller/Anbieter/Vertreiber des Programms die Kontrolle über die konkrete Ausgestaltung des Programmablaufs, da er die Bedingungen vorgibt, unter denen die Anzeige von solchen programmfremden Informationen gestattet ist.

Zum Beispiel können Unternehmen Symbole auf Spielflächen einer Spiele-App mieten, die damit als eine Form von Werbung dienen können. Auf diesen Ikonen kann dann das Logo des Unternehmens abgebildet werden. Die programmfremden Informationen bestehen dann also aus zur Werbung geeigneten Informationen. Die Bestätigung des Herstellers/Vertreibers/Anbieters erfolgt in der Regel erst dann, wenn die geforderte Gegenleistung für die Miete erbracht ist. Diese kann z. B. neben einer Miete in Geld auch in der Abgabe von Gutscheinen erfolgen, die den Spielern dann als Bonusdaten zur Verfügung stehen.

Nach den gleichen Prinzipien kann dem Spieler nach dem Beenden des Spiels ein Gutschein vom Werbetreibenden oder dem Vermieter der Werbung angezeigt werden, den er dann in der realen Welt einlösen kann. Firmen können z. B. verpflichtet sein, den Spielbetreiber für das Abbilden von Firmenlogos während des Spiels, für das Abbilden von Rabattgutscheinen und/oder für die Gutscheineinlösung durch den Spieler zu bezahlen.

Die gewonnen Rabattgutscheine können dem Spieler in der Anwendung angezeigt werden. Er kann sie z. B. mittels dazu bestimmter Tasten annehmen oder ablehnen. Die Gutscheine können aus einem Zahlencode und/oder einem QR-Code bestehen, die die gewonnenen Rabatte anzeigen und die bei deren Einlösung verwendet werden.

Eine Mehrzahl von programmfremden Informationen kann während des Ausführens des Programms von der Kommunikationseinheit empfangen und/oder von der Speichereinheit gespeichert werden und die Rechnereinheit kann anhand der Profildaten daraus die programmfremden Informationen auswählen, die angezeigt werden. Dadurch wird sichergestellt, dass Spieler nur solche Informationen erhalten, die für sie relevant sind. Dadurch wird vermieden, dass Speicherplatz und Rechenressourcen unnötig verbraucht werden. Werbung kann dann gezielt für jeden Spieler angezeigt werden, z. B. aufgrund von Informationen über den Standort oder häufige Aufenthaltsorte des Spielers oder über bestimmte Vorlieben des Spielers, die in den Profildaten des Spielers enthalten sind, oder aufgrund von Informationen über einen Standort an dem ein Spieler sich an einem bestimmten zukünftigen Datum aufhalten wird. Der Benutzer kann diese Daten dabei selbst in die Profildaten eingeben. Sie können aber auch automatisch erfasst oder aus bereits erfassten Daten extrapoliert werden.

Hierbei können auch Produkte auf den Ikonen dargestellt werden, z. B. als Logos. Nach dem Ende des Spiels wird das entsprechende Produkt angezeigt, wenn das jeweilige Produkt den Benutzer anspricht, kann er das Produkt auswählen und wird direkt an einen E-Shop weitergeleitet, auf dem das Produkt angeboten wird. Dabei kann eine Gebühr für die Weiterleitung durch den Spieleanbieter fällig werden, z. B. 10 Cent von der Firma, die das Produkt in das Spiel ausgefertigt hat. Die Gebühr für die Weiterleitung kann durch den Kauf von Ikonen und/oder Gutscheinen auf eine bestimmte Gebühr festgesetzt werden.

Die Erfindung wird nunmehr unter Bezugnahme auf die beigefügten Zeichnungen beispielhaft beschrieben, in denen entsprechende Einzelteile durch entsprechende Bezugszeichen bezeichnet sind. Es zeigen:
- Fig. 1: eine schematische Darstellung einer elektronischen Vorrichtung gemäß einer Ausführungsform; und
- Fig. 2: eine schematische Darstellung eines Flussdiagrams eines Verfahrens zum Betreiben einer elektronischen Vorrichtung gemäß einer Ausführungsform.

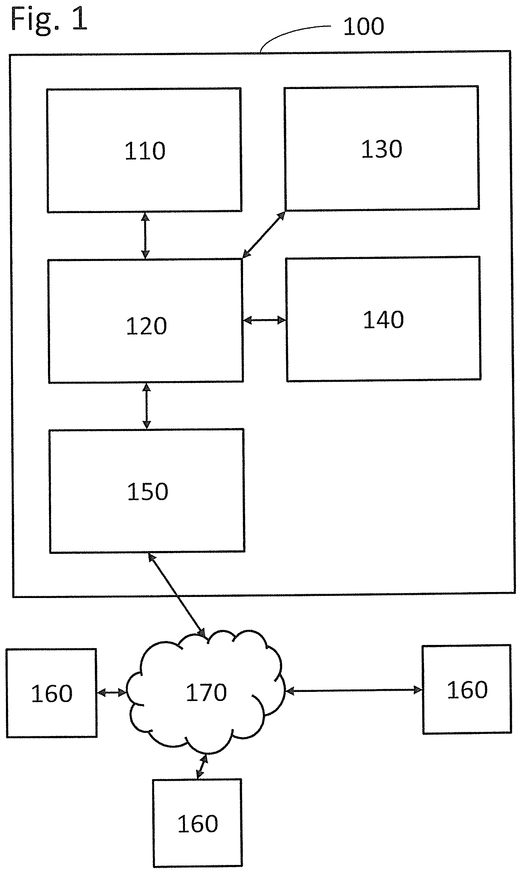

Fig. 1 stellt eine elektronische Vorrichtung 100 zum Ausführen eines Programms dar. Bei der elektronischen Vorrichtung 100 kann es sich z. B. um eine tragbare Vorrichtung, um ein Mobiltelefon, wie etwa ein Smartphone, einen Tablet-Computer, einen Laptop oder einen PC handeln. Die elektronische Vorrichtung ist in der Lage, Computerprogramme unter Interaktion mit einem Benutzer auszuführen und auf einer Ausgabeeinheit darzustellen. Bei den Computerprogrammen kann es sich z. B. um Anwendungen bzw. Applikationen (Apps) handeln, die speziell für die elektronische Vorrichtung 100 hergestellt wurden. Zum Beispiel kann es sich bei dem Programm um eine Spiele-App handeln, die für die Benutzung auf Smartphones und Tablet-Computern ausgelegt ist.

Die elektronische Vorrichtung 100 umfasst unter anderem eine Speichereinheit 110, eine Rechnereinheit 120, eine Anzeigeeinheit 130, eine Eingabeeinheit 140 und eine Kommunikationseinheit 150. Die elektronische Vorrichtung 100 kann neben diesen Einheiten beliebige weitere Elemente aufweisen, die für ein fehlerfreies Funktionieren nötig sind. Die oben aufgezählten Einheiten können sowohl als Hardwarekomponenten als auch als reine Softwaremodule ausgebildet sein. Sie können aber auch durch eine Interaktion von Hardwarekomponenten und Softwaremodulen konstituiert sein.

Bei der Speichereinheit 110 kann es sich um eine jegliche Art von Speichermedium handeln, das zum kurzzeitigen oder dauerhaften Speichern von elektronischen Daten geeignet ist. Bei dem Speichermedium kann es sich um einen "Random-Access-Memory" (RAM) oder einen "Read-Only-Memory" (ROM) handeln. Die Speichereinheit 110 kann zum Beispiel als Halbleiterspeicher, als Magnetspeicher, als optisches Speichermedium oder als Kombination daraus ausgebildet sein. Die Speichereinheit 110 kann auch aus mehreren einzelnen Speicherelementen bestehen, denen verschiedene Aufgaben zugwiesen sein können, wie etwa aus einem oder mehreren RAMs und einem oder mehreren ROMs. Das Speichereinheit 110 muss nicht fest mit der elektronischen Vorrichtung 100 verbunden sein. Es kann sich bei dem Speichereinheit 110 somit auch um ein austauschbares Speichermedium handeln, z. B. um eine "Secure-Digital-Memory-Card", d. h. um eine SD-Karte.

Die Rechnereinheit 120 kann eine Kombination aus einer jeglichen Art von Prozessoren sein, die zur Ausführung von Computerprogrammen geeignet ist. Die Rechnereinheit 120 kann zum Beispiel als Zentralprozessor ("Central Processing Unit, CPU") ausgebildet sein und mittels eines Bus-Systems mit den anderen Komponenten der elektronischen Vorrichtung kommunizieren bzw. diese Steuern. Die Rechnereinheit ist in der Lage durch Auslesen des in der Speichereinheit 110 gespeicherten Programms dieses Programm auszuführen. Die Rechnereinheit 120 bedient sich dabei der anderen Komponenten der elektronischen Vorrichtung 100, falls dies nötig ist.

Bei der Anzeigeeinheit 130 kann es sich um jede Art von elektronischem Anzeigemedium handeln, dass geeignet ist, einem Benutzer der elektronischen Vorrichtung den Verlauf des Ausführens des Programms durch die Rechnereinheit anzuzeigen. Die Anzeigeeinheit 130 kann zum Beispiel als Bildschirm, etwa als Flüssigkristallbildschirm ("Liquid Crystal Display, LCD") oder dergleichen, ausgebildet sein, der durch während des Ausführens des Programms durch die Rechnereinheit 120 erzeugte Anzeigesignale von der Rechnereinheit 120 gesteuert wird. Zudem kann die Anzeigeeinheit alternativ oder zusätzlich andere Anzeigemittel umfassen, wie etwa Anzeigen aus einzelnen LED-Lichtern oder akustische Anzeigen.

Die Eingabeeinheit 140 kann aus jeder Art von Eingabemitteln oder Benutzerschnittstellen bestehen, die es einem Benutzer erlauben, mit dem durch die Rechnereinheit 120 ausgeführten Programm zu interagieren. Die Eingabeeinheit 140 kann z. B. aus verschiedenen Eingabeknöpfen bestehen. Die Eingabeeinheit 140 kann aber auch mit der Anzeigeeinheit 130 zusammen als berührungsempfindlicher Bildschirm ausgebildet sein, über den Eingabebefehle direkt durch Drücken oder Antippen des Bildschirms an die Rechnereinheit 120 übertragen werden. Ein Benutzer kann also die Ausführung des Programms mittels Eingaben über die Eingabeeinheit 140 steuern.

Bei der Kommunikationseinheit 150 kann es sich um jegliche Mittel zur Herstellung einer Kommunikationsverbindung zum Datenaustausch mit anderen externen elektronischen Geräten 160 handeln. Die Kommunikationseinheit 150 kann dabei in der Lage sein, über kurze Distanzen hinweg direkt mit einem oder mehreren externen elektronischen Geräten 160 zu kommunizieren. Zum Beispiel kann die Kommunikationseinheit 150 zur Kommunikation mittels Bluetooth^{™} in der Lage sein. Dann besteht ein Netzwerk 170 über das die elektronische Vorrichtung 100 mit externen elektronischen Geräten 160 kommuniziert aus der direkten Verbindung zu diesen Geräten. Die Kommunikationseinheit 150 kann aber auch in der Lage sein sich drahtlos oder drahtgebunden in ein serverbasiertes Netzwerk, wie etwa das Internet, einzuwählen und über dieses Netzwerk 170 mit den externen elektronischen Geräten 160 zu kommunizieren. Des Weiteren kann die Kommunikationseinheit 150 zum Beispiel auch geeignet sein, mittels eines Mobilfunkstandards mit den externen elektronischen Geräten 160 zu kommunizieren. Die Kommunikationseinheit 150 kann auch auf mehrere der oben beschriebenen Arten gleichzeitig mit den externen elektronischen Geräten 160 kommunizieren.

Während das Programm durch die Rechnereinheit 120 ausgeführt wird, kommuniziert die Kommunikationseinheit 150 mit denjenigen der externen elektronischen Geräte 160, die ebenfalls das Programm oder ein Komplementärprogramm ausführen. Zum Beispiel kann die elektronische Vorrichtung 100 während das Programm ausgeführt wird mit externen elektronischen Geräten 160 derart kommunizieren, dass sich der Verlauf des Programms auf der elektronischen Vorrichtung 100 und den elektronischen Geräten 160 wechselseitig beeinflusst. Zum Beispiel kann in dem Fall, dass es sich bei dem Programm um eine Spiele-Applikation handelt, der Benutzer des Programms gegen andere Benutzer spielen.

Um einen möglichst abwechslungsreichen Spielverlauf zu garantieren, kann dabei die Rechnereinheit 120 Profildaten für ein Benutzerprofil erstellen, das mit den Benutzerprofilen von weiteren Benutzern des Programms verglichen wird, um dadurch eine geeignete Paarung auszuwählen. Die Rechnereinheit 120 wählt dann dasjenige elektronische Gerät 120 aus, dessen Benutzer eine optimale Paarung mit dem Benutzer der elektronischen Vorrichtung 100 ergibt. Ein Benutzer kann allgemein durch mehrere Profile mit unterschiedlichen Angaben (z. B. während der Woche oder am Wochenende oder während des Urlaubs usw.) definiert sein. Im Profil können dann auch unterschiedliche Orte/Adressen angegeben sein, so dass die Werbung nur während einer bestimmten Zeit in einem gewissen Gebiet (Postleitzahl) und für bestimmte Artikel erfolgt.

Die Kommunikationseinheit 150 kann aber auch mit einem Server des Herstel-Iers/Vertreibers/Anbieters des Programms als dem externen elektronischen Gerät 160 kommunizieren. Dies ermöglicht es dem Benutzer des Programms verschiedene Interaktionen mit dem Hersteller/Vertreiber/Anbieter des Programms auszuführen, die Einfluss auf den Verlauf des Programms nehmen können.

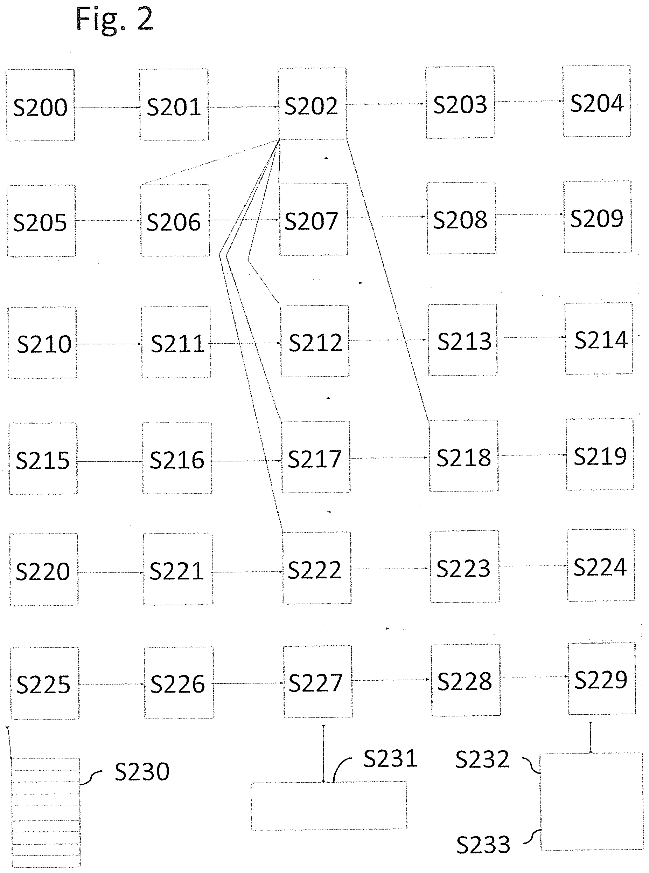

Es ist somit möglich mit der erfindungsgemäßen elektronischen Vorrichtung eine Vielzahl von Interaktionen vorzunehmen, ohne dass besondere Mittel zur Spielsteuerung oder besondere Anforderungen an den Speicherbedarf benötigt werden, wie sie typischer Weise in portablen elektronischen Geräten nicht zur Verfügung stehen. Weitere Möglichkeiten mit dem und durch das Programm zu interagieren werden im Folgenden mit Bezug auf das schematische Ablaufdiagramm der Fig. 2 für das Beispiel einer Spiele-App erläutert.

Bei S200 wird das Spiel gestartet. Das Spiel ist hierbei eine Smartphone- oder Tablet-Anwendung, die man von einem Play-Store (z. B. Appstore oder Googleplay) eines Anbieters/Vertreibers des Spiels herunterladen und auf dem Smartphone installieren kann. Das Spiel wird durch Antippen eines Symbols mit dem Namen des Spiels auf dem Smartphone-Bildschirm gestartet. Nach dem Spielstart bietet das Spiel die Möglichkeit, es ohne Registrierung zu spielen, sich anzumelden oder sich zu registrieren. Die Anmeldung ist mittels Eingabe von Daten oder auch über eine bereits erfolgte Registrierung in einem sozialen Netzwerk, wie z. B. über ein Facebook^{™}-Konto möglich. Die Registrierung und anschließende Anmeldung erlaubt dem Spieler, ein Spielerprofil anzulegen, das dann zwischen einzelnen Spielen ausgetauscht werden kann.

Bei S201 wird das Spiel, z. B. mit dem Namen "Iconity", geladen, woraufhin bei S202 ein Hauptmenü angezeigt wird. Auf diesem Startbildschirm werden Informationen über den Spielstand und den aktuellen Bestand an Bonusmünzen bzw. Spielergold angezeigt. Ausgehend vom Hauptmenü ist es möglich, ein Menü für Grundeffekte (S203), ein Menü für ein normales Spiel (S206), ein Menü für Spieleinstellungen (S212), ein Menü für den Kauf von Bonusmünzen bzw. Spielergold (S217), ein Menü für ein Spielerprofil, d. h. Profildaten, (S218) und ein Menü für Multiplayerspiele (S222) zu erreichen. Zudem ist ausgehend vom Menü für Grundeffekte bei S204 ein Menü für Spezialeffekte erreichbar. Um von einem Menü zu dem zuvor angezeigten Menü zu gelangen, kann der Spieler z. B. eine "Zurück"-Taste betätigen oder ein entsprechendes Symbol auf dem Bildschirm antippen.

Das Menü für Grundeffekte und das Menü für Spezialeffekte ermöglicht es, Effekte zu tauschen und/oder zu kaufen, die dann in späteren Spielen verwendet werden. Dazu können entweder Spielpunkte, Spielergold und/oder Geld verwendet werden. Zum Beispiel können Spieler auch Effekte bzw. Spielverbesserungen von Unternehmen kaufen. Die Grundeffekte stehen dabei jedem Spieler zur Verfügung, wohingegen die Spezialeffekte je nach Fortschritt des Spiels, z. B. je nach erreichter Spielpunktezahl freigegeben werden.

In einem Schritt S205 kann ein Spieler vom Hauptbildschirm oder vom Menü für Spezialeffekte aus einmal pro Tag ein Bonusspiel in Form eines "Glücksradspiel" oder "Wheel of Fortune" starten und spielen, bei dem der Spieler z. B. Spielergold und/oder Gutscheine gewinnen kann.

Ausgehend von diesem Bonusspiel oder direkt vom Hauptmenü aus kann der Spieler bei S206 ein Spiel starten. Die Dauer des Spiels ist dabei limitiert und kann z. B. eine Minute betragen. Nachdem das Spiel gestartet wurde, wird bei S207 ein Bildschirm mit einem 8x8-Spielfeld abgebildet, das verschiedene Symbole/Ikonen enthält. Hierbei ist es möglich, dass Unternehmen vom Spielebetreiber bzw. -hersteller ermöglicht wird, ihre Firmenlogos oder sonstige Werbebotschaften auf den Symbolen gegen Entgelt darzustellen. Zudem können Unternehmen gegen Entgelt an den Spielebetreiber oder -hersteller Rabattgutscheine als Gewinn anbieten. Eine Zahlung von den Unternehmen an den Spielebetreiber oder -hersteller kann dabei auch alternativ oder zusätzlich bei dem Einlösen des Gutscheins durch den Spieler erfolgen.

Ziel des Spiels ist es, nebeneinander liegende Symbole derart zu vertauschen, dass drei oder mehr gleiche Symbole in einer Reihe oder einer Spalte nebeneinander liegen. Für die erfolgreiche Verknüpfung gleicher Symbole erhält der Spieler Punkte und/oder Bonusmünzen bzw. Spielergold. Der Spieler kann während des Spiels die verfügbaren Effekte benutzen, um den Verlauf des Spiels zu verändern. Bei S208 kann der Spieler das Spiel pausieren. Während der Pause läuft die Spielzeit nicht weiter. Bei S209 ist das Spiel beendet. Der Schritt S209 kann hierbei mit dem Schritt S202 verknüpft sein. Kurz vor Ende des Spiels, z. B. in der letzten Spielsekunde, kann dem Spieler durch besondere visuelle oder akustische Signale angezeigt werden, dass die Spielzeit in Kürze abläuft.

Bei S210 wird dem Spieler angezeigt, dass er einen Gutschein gewonnen hat, der von einem Unternehmen angeboten wurde. Bei S211 wird dem Spieler hingegen angezeigt, dass er keinen Gutschein gewonnen hat.

Ausgehende vom Hauptmenü kann der Spieler bei S212 ein Menü für Spieleinstellungen öffnen. In diesem Menü für die Änderung der Einstellungen können bei S213 die Helligkeit und Lautstärke sowie bei S216 die Einstellungen bezüglich eines Benutzerkontos, eines Fotos des Spielers oder eines Kennworts geändert werden. Zudem kann man bei S214 Informationen über den Ablauf des Spiels, d. h. eine Anleitung, erhalten und bei S215 Feedback an den Spielbetreiber oder -hersteller schicken. Es ist zudem möglich sich abzumelden.

Ausgehend vom Hauptmenü kann der Spieler bei S217 ein Menü zum Erwerb von Bonusmünzen bzw. Spielergold öffnen. In diesem Menü können unterschiedliche Mengen von Spielergold erworben werden. Das Spielergold kann z. B. unter dem Namen Icoin (n) oder ECOIN (e) für den Preis von 1 Münze pro 1 Euro-Cent erworben werden. Mit diesen Münzen können Spieler, Unternehmen und Spielbetreiber/Hersteller untereinander handeln. Spieler können damit Spielverbesserungen und Waren oder Dienstleistungen von Unternehmen kaufen. Unternehmen können mittels der Münzen den Spielbetreiber für Werbemaßnahmen bezahlen. Der Handel kann bei S232 auch über eine Börse erfolgen, die Verkauf und Wechsel von Rabattgutscheinen ermöglicht.

Bei S220 kann ein Menü für Spielerprofile angezeigt werden. Hier können Spielername, Spielerfoto, Spiellevel, die aktuelle Punktzahl des Spielers, die Menge des Spielergolds und die Spielerliste mit dem aktuellen Spielerstand abgebildet sein. Daraus kann bei S218 der Spielpunktestand des jeweiligen Spielers entnommen werden. Dabei kann es sich um Höchstpunktestände, die weltweit jemals erzielt wurden, um den eigenen Punktestand oder um den Punktestand von bekannten Mitspielern, etwa von Freunden, handeln. Genauso können bei S219 die gewonnen Gutscheine eingesehen werden. Die gewonnen Rabattgutscheine werden dem Spieler hier angezeigt, und er kann sie mittels dazu bestimmter Tasten/Bedienfelder entweder annehmen oder ablehnen. Die Gutscheine können aus einem Zahlencode und/oder QR-Code bestehen, der als Bezeichnung für die Rabatte dient und bei deren Einlösung verwendet wird.

Bei S221 können zudem Filter für den Erhalt von Werbung und die zu gewinnenden Gutscheine gesetzt werden. Werbung und Gutscheine werden denjenigen Spielern passend zu ihren Vorlieben angeboten, die entsprechende Filter setzen. Zum Beispiel können Informationen über bevorzugte Standorte im In- und Ausland eingegeben werden. Es könne auch Informationen über Ort und Zeit zukünftiger Aufenthalte eingegeben werden. Ein Spieler kann aber Werbung/Gutscheine auch nach seinen persönlichen Vorlieben filtern lassen.

Ausgehend vom Startmenü kann ein Spieler ein Multiplayerspiel starten. Wenn der Spieler das Multiplayerspiel wählt, wird ein Bildschirm angezeigt, über den weltweit nach einem passenden Gegner gesucht wird oder über den ein bestimmter Spielerfreund auswählbar ist. Zugleich ist es möglich, Spielergold oder Rabattgutscheine zu setzen (S222).

Nach dem Start des Spiels bei S223 kann die automatische Auswahl eines Gegners bei S224 zufällig erfolgen, es wird dann aber das Niveau der Spieler berücksichtigt, um die Gleichwertigkeit der gegeneinander spielenden Spieler zu gewährleisten. Bei S225 können die Spieler die verwendeten Effekte auswählen. Hierauf wird das Spiel entweder durchgeführt (S226) oder die Spieler können ohne zu spielen zum Hauptmenü des Spiels zurückkehren.

Ziel des Spiels ist es, die höchste Punktzahl zu erhalten. Der Spieler mit der erreichten höchsten Punktzahl wird bei S227 bekanntgegeben und gewinnt die eingesetzten Münzen und/oder Rabattgutscheine des Gegners (S228). Seinen Erfolg kann der Spieler über soziale Netzwerke, wie etwa Facebook™ mit anderen teilen. Im Falle eines Spielverlusts wird auch dies bei S229 bekannt gegeben. Bei S230 kann eine Wiederholung des Spiels angefragt/gestartet werden.

Bei S232 und S233 kann über eine Spielerbörse mit gewonnen Bonusmünzen und/oder den Rabattgutscheinen gehandelt werden. Es ist z. B. möglich auf einer Verkaufswebseite, wie etwa einem E-Shop, Spielergold zu kaufen oder zu verkaufen. Die Spieler können auch untereinander Spielermünzen und/oder Gutscheine tauschen oder diese einander verkaufen. Zudem können Spieleverbesserungen und/oder Waren- und/oder Dienstleistungen von Unternehmen gegen Spielergold erworben werden. Genauso können die Unternehmen die Bonusmünzen verwenden, um bei dem Hersteller/Anbieter/Vertreiber des Spiels Werbemaßnahmen zu kaufen. Die gesamte Iconity-Anwendung, d. h. die Vermittlung von Spielern, Spielergold und Gutscheinen sowie die Möglichkeit mit den Iconity-Gewinnen zu handeln, wird dabei bei S231 durch eine geeignete Serverstruktur bereitgestellt.

Es versteht sich von selbst, dass die oben beschriebene Ausführungsform nur ein Beispiel für ein höchst interaktives, aber leicht zu bedienendes Computerprogramm mit wenig Speicherbedarf ist. Die Erfindung ist allein durch den Gegenstand der Ansprüche bestimmt.

Im Rahmen der Erfindung können die Ikonen verschiedene Logos, Produkte aber auch Fotos sein, wenn z. B. Sänger, Schauspieler oder Politiker für sich Werbung machen. Diese können dann mit deren Webseiten verlinkt sein, wobei auf deren Filme, CDs, Wahlkampf verwiesen wird.

## Patentansprüche

1. Elektronische Vorrichtung (100) mit
einer Speichereinheit (110) zum Speichern eines Programms;
einer Rechnereinheit (120) zum Ausführen des Programms;
einer Anzeigeeinheit (130) zum Empfangen von Anzeigesignalen von der Rechnereinheit (120) und basierend darauf zum Anzeigen eines Programmverlaufs des Programms;
einer Eingabeeinheit (140) zum Empfangen von Eingabebefehlen zum Steuern des Programms von einem Benutzer der elektronischen Vorrichtung (100) und zum Ausgeben von auf den Eingabebefehlen basierenden Eingabesignalen an die Rechnereinheit (120); und
einer Kommunikationseinheit (150) zum Kommunizieren mit externen elektronischen Geräten (160) über ein Netzwerk (170); wobei
die Rechnereinheit (120) geeignet ist, das Programm anhand der Eingabesignale und anhand von Kommunikationsdaten auszuführen, die die elektronische Vorrichtung (100) über das Netzwerk (170) von zumindest einem der externen elektronischen Geräte (160) empfängt, auf dem das Programm ausgeführt wird;
die Rechnereinheit (120) geeignet ist, Profildaten eines das Programm betreffenden Profils des Benutzers zu erzeugen;
die Rechnereinheit (120) geeignet ist, das zumindest eine externe elektronische Gerät (160) anhand der Profildaten auszuwählen.

2. Elektronische Vorrichtung (100) gemäß Anspruch 1,
wobei
die Kommunikationseinheit (150) geeignet ist, die Profildaten an die externen elektronischen Geräte (160) zu kommunizieren.

3. Elektronische Vorrichtung (100) gemäß einem der vorherigen Ansprüche, wobei
die Rechnereinheit (120) geeignet ist, vorgegebene Teile des Programms nur nach Erhalt einer diesbezüglichen Bestätigung durch einen Hersteller und/oder Vertreiber des Programms auszuführen.

4. Elektronische Vorrichtung (100) gemäß Anspruch 3,
wobei
die vorgegebenen Teile des Programms Speichern von Bonusdaten in den Profildaten durch die Speichereinheit (110) umfassen, die insbesondere über dafür geeignete Webseiten und/oder Programme zwischen Benutzern des Programms getauscht werden können.

5. Elektronische Vorrichtung (100) gemäß Anspruch 4,
wobei
die Bonusdaten eine virtuelle Währung (z. B. Coins/Icoins oder Ecoins) und/oder Gutscheininformationen, die in der realen Welt eingelöst werden können, umfassen; und/oder
die Bonusdaten in Abhängigkeit von einer Zeitdauer, die das Programm ausgeführt wurde, oder dem Verlauf des Programms ausgegeben werden.

6. Elektronische Vorrichtung (100) gemäß Anspruch 3,
wobei
die vorgegebenen Teile des Programms Anzeigen von programmfremden Informationen durch die Anzeigeeinheit (130) umfassen; und
die programmfremden Informationen insbesondere auf die Profildaten bezogene Werbung von Unternehmen, die insbesondere während des Programmverlaufs angezeigt wird (z. B. in Form von Ikonen die Firmenlogos, Produkte, Personenfotos oder dergleichen), oder Rabattgutscheine für den Benutzer des Programms, die für einen bestimmten Programmverlauf ausgegeben werden, oder Werbekampagnen-Informationen von Unternehmen, die auf einem Web-Portal erstellt wurden, oder Produktinformationen, die geeignet sind auf eine Webseite zu verweisen, auf der ein den Produktinformationen entsprechendes Produkt angeboten wird, darstellen.

7. Elektronische Vorrichtung (100) gemäß Anspruch 6,
wobei
eine Mehrzahl von programmfremden Informationen während des Ausführens des Programms von der Kommunikationseinheit (150) empfangen und/oder von der Speichereinheit (110) gespeichert wird; und
die Rechnereinheit (120) anhand der Profildaten daraus die programmfremden Informationen auswählt, die angezeigt werden.

8. Elektronische Vorrichtung (100) gemäß einem der vorherigen Ansprüche, wobei
das externe elektronische Gerät (160) auch anhand der Profildaten des Benutzers (Ort, Zeit, Produktkategorie) des Programms auf dem externen elektronischen Gerät (160) ausgewählt wird, insbesondere anhand eines in den Profildaten des Benutzers der elektronischen Vorrichtung (100) gespeicherten Levels und eines in den Profildaten des Benutzers des externen elektronischen Geräts (160) gespeicherten Levels.

9. Elektronische Vorrichtung (100) gemäß Anspruch 4 oder 5, wobei die Bonusdaten geeignet sind, in einer Interaktion mit einem Benutzer des externen elektronischen Geräts (160) als Einsatz verwendet zu werden; und/oder
der Ausgang einer Interaktion mit einem Benutzer des externen elektronischen Geräts (160) über das Netzwerk (170) geteilt werden kann.

10. Elektronische Vorrichtung (100) gemäß Anspruch 5,
wobei
die virtuelle Währung (Coins/Icoins und/oder Ecoins) nur innerhalb des Programms oder auf definierten Webseiten und/oder Programmen erworben und für den Kauf und/oder Preisnachlass verwendet werden kann, insbesondere für den Kauf von speziellen Effekten, die nur durch den Eintausch der virtuellen Währung im Programm vom Hersteller und/oder Vertreiber des Programms freigegeben werden.

11. Elektronische Vorrichtung (100) gemäß Anspruch,
wobei
a) auf einer definierten Plattform mit Iconity (Ecoins, Icoins, Voucher) gespielt werden kann, und zwar sowohl im Zuge eines Spieles, als auch auf einer definierten Webseite, in Programmen
und/oder
b) in der reellen Welt gearbeitet und/oder mit
- weiteren Gegenspielern (Multiplayer)
- Austausch, Verkauf, Schenkung, Kauf
- Verwendung beim Kauf
gespielt werden kann.

12. Elektronische Vorrichtung (100) gemäß Anspruch 6,
wobei
die programmfremden Informationen gegen reales Geld auf einer Webseite des Hersteller und/oder Vertreibers des Programms gekauft werden, insbesondere durch den Tausch von realem Geld gegen eine Ecoins oder Icoins genannte virtuelle Währung, die zum Eintausch gegen die programmfremden Informationen verwendet werden kann und die über dafür geeignete Webseiten und/oder Programme zwischen Benutzern des Programms getauscht werden kann; und/oder
die programmfremden Informationen geeignet sind, gegen eine Gebühr aus dem Programm auf eine Verkaufs-Webseite weiterzuleiten.

13. Elektronische Vorrichtung (100) gemäß einem der vorherigen Ansprüche, wobei
mehrere verschieden Sätze von Profildaten für einen einzigen Benutzer des Programms vorhanden sind.

14. Verfahren zum Betreiben einer elektronischen Vorrichtung (100) mit den Schritten:
Speichern eines Programms durch eine Speichereinheit (110);
Ausführen des Programms durch eine Rechnereinheit (120);
Empfangen von Anzeigesignalen von der Rechnereinheit (120) und basierend darauf Anzeigen eines Programmverlaufs des Programms;
Empfangen von Eingabebefehlen zum Steuern des Programms von einem Benutzer der elektronischen Vorrichtung (100) und Ausgeben von auf den Eingabebefehlen basierenden Eingabesignalen an die Rechnereinheit (120); und
Kommunizieren mit externen elektronischen Geräten (160) über ein Netzwerk (170); wobei
das Programm anhand der Eingabesignale und anhand von Kommunikationsdaten ausgeführt wird, die die elektronische Vorrichtung (100) über das Netzwerk (170) von zumindest einem der externen elektronischen Geräte (160) empfängt, auf dem das Programm ausgeführt wird;
Profildaten eines das Programm betreffenden Profils des Benutzers von der Rechnereinheit (120) erzeugt werden;
das zumindest eine externe elektronische Gerät (160) von der Rechnereinheit (120) anhand der Profildaten ausgewählt wird.

15. Nichtflüchtiges, computerlesbares Speichermedium mit einem Computerprogramm, das eine elektronische Vorrichtung (100) veranlasst, das Verfahren gemäß Anspruch 13 auszuführen.
